# EUROPEAN PATENT APPLICATION

(11) **EP 4 819 168 A1**
(43) Date of publication of application: **07.10.2026**
(21) Application number: 24897642.5
(22) Date of filing: 28.11.2024
(51) Int. Cl.: H01B 5/00, H01B 1/00, H01B 1/22, H01M 4/64, H01M 4/66, H01R 11/01

(54) **ELECTROCONDUCTIVE PARTICLES, ELECTROCONDUCTIVE MATERIAL, CONNECTION STRUCTURE, AND CURRENT COLLECTOR**

(30) Priority: 28.11.2023 JP 2023200892
(71) Applicant: Sekisui Chemical Co., Ltd., Osaka-shi, Osaka 530-8565 (JP)
(72) Inventor: SHIRAISHI, Shota, Kouka-shi, Shiga 528-8585 (JP)
(74) Representative: Ter Meer und Partner mbB
(86) International application number: PCT/JP2024/042157
(87) International publication number: WO 2025/115958

(57) **Abstract**

Provided are electroconductive particles which, when used for electrical connection between metal foils, can 1) enhance dispersibility of the electroconductive particles, 2) suppress breakage of the metal foil, 3) lower initial connection resistance, and 4) enhance conduction reliability. The electroconductive particle according to the present invention is an electroconductive particle used for electrically connecting the metal foils to each other, the electroconductive particle includes a base particle and an electroconductive portion disposed on a surface of the base particle, and a compressive modulus is at 20% compression of the electroconductive particle is 1000 N/mm² or more and 25000 N/mm² or less.

## Description

### TECHNICAL FIELD

The present invention relates to electroconductive particles used for electrically connecting metal foils, and uses thereof. The present invention also relates to an electroconductive material using the electroconductive particles, a connection structure, and a current collector.

### BACKGROUND ART

In recent years, electric vehicles (BEV) and hybrid electric vehicles (HEV) have been developed in an automobile industry from the viewpoint of environmental protection. As a secondary battery for driving a motor used for the electric vehicle (BEV) and the hybrid electric vehicle (HEV), a lithium ion secondary battery capable of achieving a high energy density and a high power density has attracted attention.

In order to achieve a higher energy density and a higher power density in a lithium ion secondary battery, a bipolar battery in which a positive electrode active material and a negative electrode active material are arranged respectively on both sides of each of a plurality of current collectors has been studied.

Patent Document 1 below discloses a bipolar battery including a current collector, an electrode (positive electrode) electrically coupled to one surface of the current collector, an electrode (negative electrode) electrically coupled to the other surface of the current collector, and an electrolyte layer disposed between the plurality of electrodes, in which the current collector contains a polymer material. Patent Document 1 describes that the current collector contains electroconductive particles and that metal particles or carbon particles are used as the electroconductive particles.

Patent Document 2 below discloses an electroconductive laminate sheet including a metal layer and an electroconductive resin layer stacked on at least one surface of the metal layer. In the electroconductive laminate sheet, the electroconductive resin layer contains a resin, an electroconductive material, and polyvinylpyrrolidone, and a content ratio of the polyvinylpyrrolidone to 100 parts by mass of the electroconductive material is 100 parts by mass or more and 300 parts by mass or less. Patent Document 2 describes that carbon black is preferable as the electroconductive material.

### Related Art Documents

### Patent Documents

Patent Document 1: JP 2006-190649 A
Patent Document 2: JP 2014-167849 A

### SUMMARY OF THE INVENTION

### PROBLEMS TO BE SOLVED BY THE INVENTION

In the current collectors as in Patent Documents 1 and 2, the power density can be increased to some extent. However, in connection structures and current collectors using metal particles or carbon particles as electroconductive particles (electroconductive material) as in Patent Documents 1 and 2, a metal foil in the current collector may be broken, or the metal particles or carbon particles in a connection portion (electroconductive resin layer) may settle or aggregate. For this reason, the metal particles or the carbon particles may not be uniformly dispersed. The initial connection resistance between the metal foils of the resulting connection structure and current collector may increase, and the connection resistance after a conduction reliability test in a high-temperature and high-humidity environment may be increased (the conduction reliability may be lowered).

An object of the present invention is to provide electroconductive particles which, when used for electrical connection between metal foils, can 1) enhance dispersibility of the electroconductive particles, 2) suppress breakage of the metal foil, 3) lower initial connection resistance, and 4) enhance conduction reliability, and uses thereof. Another object of the present invention is to provide an electroconductive material using the electroconductive particles, a connection structure, and a current collector.

### MEANS FOR SOLVING THE PROBLEMS

In the present specification, the following electroconductive particles and uses thereof, an electroconductive material, a connection structure, and a current collector are disclosed.

Item 1. An electroconductive particle used for electrically connecting metal foils to each other, the electroconductive particle including: a base particle; and an electroconductive portion disposed on a surface of the base particle, a compressive modulus at 20% compression of the electroconductive particle being 1000 N/mm² or more and 25000 N/mm² or less.

Item 2. The electroconductive particle according to Item 1, wherein the base particle is a resin particle.

Item 3. The electroconductive particle according to Item 1 or 2, wherein a specific gravity of the electroconductive particle is 1.0 or more and 4.5 or less.

Item 4. The electroconductive particle according to any one of Items 1 to 3, wherein a volume resistivity of the electroconductive particle is 0.0030 Ω·m or less.

Item 5. The electroconductive particle according to any one of Items 1 to 4, wherein the electroconductive portion contains nickel.

Item 6. The electroconductive particle according to any one of Items 1 to 5, wherein the electroconductive portion contains a rust inhibitor.

Item 7. The electroconductive particle according to any one of Items 1 to 6, wherein an average value of circularity of the base particle is 0.85 or more and 1.00 or less.

Item 8. The electroconductive particle according to any one of Items 1 to 7, wherein a variation in the circularity of the base particle is 0.04 or less.

Item 9. An electroconductive material including: the electroconductive particle according to any one of Items 1 to 8; and a binder resin.

Item 10. A connection structure including: a first metal foil; a second metal foil; and a connection portion that connects the first metal foil and the second metal foil, a material of the connection portion including the electroconductive particle according to any one of Items 1 to 8, and the first metal foil and the second metal foil being electrically connected by the electroconductive particles.

Item 11. The connection structure according to Item 10, wherein the thicknesses of the first metal foil and the second metal foil are each 100 µm or less.

Item 12. The connection structure according to Item 10 or 11, wherein the first metal foil and the second metal foil each include gold, silver, copper, tin, aluminum, nickel, titanium, or stainless steel.

Item 13. A current collector used in a battery, the current collector including: a first metal foil; a second metal foil; a connection portion that connects the first metal foil and the second metal foil, a material of the connection portion including the electroconductive particle according to any one of Items 1 to 8, and the first metal foil and the second metal foil being electrically connected by the electroconductive particles.

Item 14. The current collector according to Item 13, wherein the current collector is used in a bipolar battery.

Item 15. The current collector according to Item 13 or 14, wherein the current collector is wound in a roll shape.

Item 16. A use of the electroconductive particle according to any one of Items 1 to 8 for electrically connecting a first metal foil and a second metal foil in a current collector included in a battery including the first metal foil, the second metal foil, and a connection portion that connects the first metal foil and the second metal foil.

Item 17. The use according to Item 16, wherein the battery is a bipolar battery.

### EFFECT OF THE INVENTION

The electroconductive particle according to the present invention is an electroconductive particle used for electrically connecting the metal foils. The electroconductive particle according to the present invention includes the base particle and the electroconductive portion disposed on the surface of the base particle. In the electroconductive particle according to the present invention, the compressive modulus at 20% compression of the electroconductive particle is 1000 N/mm² or more and 25000 N/mm² or less. Since the electroconductive particle according to the present invention has the above-described configuration, when the electroconductive particle is used for electrical connection between the metal foils, 1) dispersibility of the electroconductive particles can be enhanced, 2) breakage of the metal foil can be suppressed, 3) initial connection resistance can be lowered, and 4) conduction reliability can be enhanced.

### BRIEF DESCRIPTION OF DRAWINGS

[Fig. 1] Fig. 1 is a sectional view schematically showing an electroconductive particle according to a first embodiment of the present invention.
[Fig. 2] Fig. 2 is a sectional view schematically showing the electroconductive particle according to a second embodiment of the present invention.
[Fig. 3] Fig. 3 is a sectional view schematically showing the electroconductive particle according to a third embodiment of the present invention.
[Fig. 4] Fig. 4 is a sectional view schematically showing a connection structure (current collector) using the electroconductive particles shown in Fig. 1.
[Fig. 5] Fig. 5 is a sectional view schematically showing a bipolar battery using the connection structure (current collector) shown in Fig. 4.

### MODE(S) FOR CARRYING OUT THE INVENTION

Hereinafter, the details of the present invention will be described.

### (Electroconductive particle)

The electroconductive particle according to the present invention is an electroconductive particle used for electrically connecting the metal foils. The electroconductive particle according to the present invention includes the base particle and the electroconductive portion disposed on the surface of the base particle. In the electroconductive particle according to the present invention, the compressive modulus at 20% compression of the electroconductive particle is 1000 N/mm² or more and 25000 N/mm² or less.

When known electroconductive particles (in particular, metal particles or carbon particles) are used for electrical connection between the metal foils, the metal foil may be broken, or dispersibility of the metal particles or carbon particles in a connection portion may be insufficient. Specifically, when the metal particles are used for the electrical connection between the metal foils, the metal foil may be damaged due to hardness of the metal particles, or the metal particles may be settled due to a high specific gravity of the metal particles and may not be uniformly dispersed in the connection portion. When the carbon particles are used for the electrical connection between the metal foils, the carbon particles may aggregate and may not be uniformly dispersed in the connection portion. In these cases, initial connection resistance between the metal foils of a resulting connection structure and current collector may be increased, and the connection resistance after a conduction reliability test in a high-temperature and high-humidity environment may be increased (conduction reliability may be lowered).

Since the electroconductive particle according to the present invention has the above-described configuration, when the electroconductive particle is used for electrical connection between the metal foils, 1) dispersibility of the electroconductive particles can be enhanced, 2) breakage of the metal foil can be suppressed, 3) initial connection resistance can be lowered, and 4) conduction reliability can be enhanced.

The compressive modulus (20% K value) at 20% compression of the electroconductive particle is 1000 N/mm² or more and 25000 N/mm² or less. The 20% K value of the electroconductive particle is preferably 1200 N/mm² or more, more preferably 1500 N/mm² or more, still more preferably 1600 N/mm² or more, particularly preferably 1700 N/mm² or more, and most preferably 1800 N/mm² or more, and preferably 23000 N/mm² or less, more preferably 22000 N/mm² or less, still more preferably 21000 N/mm² or less, and particularly preferably 20000 N/mm² or less. When the 20% K value of the electroconductive particle is the above lower limit or more, the dispersibility of the electroconductive particles can be further enhanced when the metal foils are connected to each other using the electroconductive particles, a contact area between the electroconductive particles and the metal foil becomes suitable, the initial connection resistance can be further lowered, and the conduction reliability can be further enhanced. When the 20% K value of the electroconductive particle is the above upper limit or less, breakage of the metal foil can be more effectively suppressed when the metal foils are connected to each other using the electroconductive particles, the initial connection resistance can be further lowered, and the conduction reliability can be further enhanced.

The compressive modulus (10% K value) when the electroconductive particle is 10% compressed is preferably 100 N/mm² or more, more preferably 150 N/mm² or more, still more preferably 200 N/mm² or more, particularly preferably 250 N/mm² or more, and preferably 30000 N/mm² or less, more preferably 28000 N/mm² or less, still more preferably 26000 N/mm² or less, and particularly preferably 24000 N/mm² or less. When the 10% K value of the electroconductive particle is the lower limit or more, the electroconductive particles suitably come into contact with the metal foil when the metal foils are connected to each other using the electroconductive particles, so that the initial connection resistance can be further lowered. When the 10% K value of the electroconductive particle is the above upper limit or less, breakage of the metal foil can be more effectively suppressed when the metal foils are connected to each other using the electroconductive particles.

The compressive modulus (30% K value) when the electroconductive particle is 30% compressed is preferably 200 N/mm² or more, more preferably 300 N/mm² or more, still more preferably 400 N/mm² or more, particularly preferably 500 N/mm² or more, and preferably 40000 N/mm² or less, more preferably 35000 N/mm² or less, still more preferably 30000 N/mm² or less, and particularly preferably 25000 N/mm² or less. If the 30% K value of the electroconductive particle is the above lower limit or more, when the metal foils are connected to each other using the electroconductive particles, the contact area between the electroconductive particles and the metal foil becomes suitable, and the initial connection resistance can be further lowered. When the 30% K value of the electroconductive particle is the above upper limit or less, breakage of the metal foil can be more effectively suppressed when the metal foils are connected to each other using the electroconductive particles.

In the electroconductive particle, a ratio (10% K value/20% K value) of the compressive modulus at 10% compression (10% K value) to the compressive modulus at 20% compression (20% K value) is preferably 1.00 or more, more preferably 1.05 or more, still more preferably 1.10 or more, and preferably 1.20 or less, more preferably 1.15 or less, still more preferably 1.13 or less. When the ratio (10% K value/20% K value) is the above lower limit or more and the above upper limit or less, the effect of the present invention can be more effectively exhibited.

In the electroconductive particle, a ratio (20% K value/30% K value) of the compressive modulus at 20% compression (20% K value) to the compressive modulus at 30% compression (30% K value) is preferably 1.00 or more, more preferably 1.05 or more, still more preferably 1.10 or more, and preferably 1.60 or less, more preferably 1.50 or less, still more preferably 1.40 or less. When the ratio (20% K value/30% K value) is the above lower limit or more and the above upper limit or less, the effect of the present invention can be more effectively exhibited.

The 10% K value, 20% K value, and 30% K value of the electroconductive particle can be measured as follows.

Using a micro compression testing machine, the electroconductive particles are compressed at a smooth indenter end face of a cylinder (diameter of 50 µm, made of diamond) under the conditions of loading at 25°C and a maximum test load of 90 mN over 30 seconds. The load value (N) and compression displacement (mm) at this time are measured. From the obtained measured value, the compressive modulus can be obtained by the following formula. As the micro compression testing machine, for example, "Fischer Scope H-100" manufactured by FISCHER INSTRUMENTS K.K., or the like is used.$K value \left(N/{mm}^{2}\right) = \left(3/{2}^{1 / 2}\right) ⋅ F ⋅ {S}^{- 3 / 2} ⋅ {R}^{- 1 / 2}$
F: Load value (N) when the electroconductive particle is 10%, 20% or 30% compressed and deformed
S: Compression displacement (mm) when the electroconductive particle is 10%, 20% or 30% compressed and deformed
R: Radius of electroconductive particle (mm)

Examples of a method of controlling the 10% K value, the 20% K value, and the 30% K value within preferable ranges include the following methods. A method of adjusting physical properties by adjusting the monomer species, monomer molecular weight, crosslinking material, polymerization temperature, polymerization time, and the like of the base particle. A method of adjusting hardness by adjusting the metal type and alloy type of the electroconductive portion, a thickness of the electroconductive portion, and the like.

From the viewpoint of further improving the effect of the present invention, a compression recovery rate of the electroconductive particles is preferably 20% or more, more preferably 25% or more, still more preferably 30% or more, and preferably 95% or less, more preferably 90% or less, still more preferably 85% or less.

The compression recovery rate can be measured as follows.

The electroconductive particles are spread on a sample stage. Using a micro compression testing machine, one of the spread electroconductive particles is subjected to a load (reverse load value) in a center direction of the electroconductive particle at a smooth indenter end face of a cylinder (diameter of 100 µm, made of diamond) at 25°C until the electroconductive particle is 40% compressed and deformed. After that, unloading is performed up to an origin load value (0.40 mN). The load-compression displacement during this period is measured, and the compression recovery rate can be obtained from the following equation. The loading rate is 0.33 mN/sec. As the micro compression testing machine, for example, "Fischer Scope H-100" manufactured by FISCHER INSTRUMENTS K.K., or the like is used.$Compression recovery rate \left(%\right) = \left[L2/L1\right] \times 100$
L1: Compression displacement from the origin load value to the reverse load value when a load is applied
L2: Unloading displacement from the reverse load value to the origin load value when a load is released

The specific gravity of the electroconductive particle is preferably 1.0 or more, more preferably 1.5 or more, still more preferably 2.0 or more, and preferably 4.5 or less, more preferably 3.5 or less, still more preferably 3.0 or less. When the specific gravity of the electroconductive particle is the above lower limit or more, the electroconductive particles do not float in the connection portion, and the electroconductive particles can be suitably dispersed. When the specific gravity of the electroconductive particle is the above upper limit or less, the electroconductive particles can be prevented from settling in the connection portion, and the electroconductive particles can be uniformly dispersed by a simple operation.

The specific gravity of the electroconductive particle can be measured using a specific gravity meter. Examples of the specific gravity meter include "AccuPyc series" manufactured by Shimadzu Corporation.

The volume resistivity of the electroconductive particle is preferably 0.0030 Ω·m or less, more preferably 0.0020 Ω·m or less, and still more preferably 0.0015 Ω·m or less. When the volume resistivity of the electroconductive particle is the above upper limit or less, the metal foils can be well electrically connected to each other even with a small amount of electroconductive particles, and excessive heat generation due to resistance can be suppressed. The lower limit of the volume resistivity of the electroconductive particle is not particularly limited. The volume resistivity of the electroconductive particle may be 0.0001 Ω·m or more, 0.0003 Ω·m or more, or 0.0005 Ω·m or more.

The volume resistivity of the electroconductive particle can be measured using, for example, a powder resistance measurement system. Examples of the powder resistance measurement system include "Powder Resistance Measurement System MCP Series" manufactured by Mitsubishi Chemical Analytech Co., Ltd.

The particle diameter of the electroconductive particle is preferably 0.5 µm or more, more preferably 1.0 µm or more, and preferably 500 µm or less, more preferably 300 µm or less, still more preferably 100 µm or less, particularly preferably 30 µm or less. When the particle diameter of the electroconductive particle is the above lower limit or more and the above upper limit or less, when the metal foils are connected to each other using the electroconductive particles, the contact area between the electroconductive particles and the metal foil becomes sufficiently large, and when the electroconductive portion is formed, aggregated electroconductive particles can be hardly formed. In addition, an interval between the metal foils connected via the electroconductive particles does not become too large, and the electroconductive portion hardly peels off from the surface of the base particle. When the particle diameter of the electroconductive particle is the above lower limit or more and the above upper limit or less, the electroconductive particle can be suitably used for application of an electroconductive material.

The particle diameter of the electroconductive particle is preferably an average particle diameter, and more preferably a number average particle diameter. The particle diameter of the electroconductive particle is determined by, for example, observing arbitrary 50 electroconductive particles with an electron microscope or an optical microscope, and calculating an average value of the particle diameter of each electroconductive particle or performing laser diffraction type particle size distribution measurement. In the observation with the electron microscope or the optical microscope, the particle diameter of the electroconductive particle per particle is determined as a particle diameter corresponding to an equivalent circle diameter. In the observation with the electron microscope or the optical microscope, the average particle diameter obtained from the equivalent circle diameters of arbitrary 50 electroconductive particles is substantially equal to the average particle diameter corresponding to an equivalent sphere diameter. In the laser diffraction type particle size distribution measurement, the particle diameter of the electroconductive particle per particle is determined as a particle diameter corresponding to an equivalent sphere diameter. The particle diameter of the electroconductive particle is preferably calculated by laser diffraction particle size distribution measurement.

The electroconductive particles are suitably used for the electrical connection between the metal foils. The electroconductive particles are electroconductive particles for metal foil connection. The electroconductive particles are preferably not used for an anisotropic electroconductive material.

Hereinafter, the present invention will be specifically described with reference to the drawings.

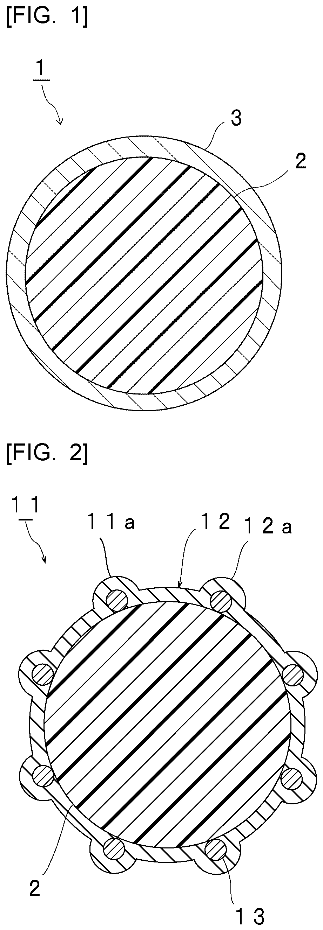

Fig. 1 is a sectional view schematically showing the electroconductive particle according to a first embodiment of the present invention.

An electroconductive particle 1 shown in Fig. 1 includes a base particle 2 and an electroconductive portion 3. The electroconductive portion 3 is disposed on a surface of the base particle 2. In the first embodiment, the electroconductive portion 3 is in contact with the surface of the base particle 2. The electroconductive particle 1 is a covered particle in which the surface of the base particle 2 is covered with the electroconductive portion 3. In the electroconductive particle 1, the electroconductive portion 3 is a single-layer electroconductive portion (electroconductive layer).

Unlike electroconductive particles 11 and 21 described later, the electroconductive particle 1 does not have a core material. The electroconductive particle 1 does not have a protrusion on the surface and does not have a protrusion on an outer surface of the electroconductive portion 3. The electroconductive particle 1 is spherical.

As described above, the electroconductive particle according to the present invention may have no protrusion on the surface, may have no protrusion on the outer surface of the electroconductive portion, or may have a spherical shape.

Fig. 2 is a sectional view schematically showing the electroconductive particle according to a second embodiment of the present invention.

The electroconductive particle 11 shown in Fig. 2 includes the base particle 2, an electroconductive portion 12, and a plurality of core materials 13. The electroconductive portion 12 is disposed on the surface of the base particle 2 so as to be in contact with the base particle 2. In the electroconductive particle 11, the electroconductive portion 12 is a single-layer electroconductive portion (electroconductive layer).

The electroconductive particle 11 has a plurality of protrusions 11a on the surface. The electroconductive portion 12 has a plurality of protrusions 12a on an outer surface. The plurality of core materials 13 are arranged on the surface of the base particle 2. The plurality of core materials 13 are embedded in the electroconductive portion 12. The core material 13 is disposed inside the protrusions 11a and 12a. The electroconductive portion 12 covers the plurality of core materials 13. The outer surface of the electroconductive portion 12 is raised by the plurality of core materials 13, and the protrusions 11a and 12a are formed.

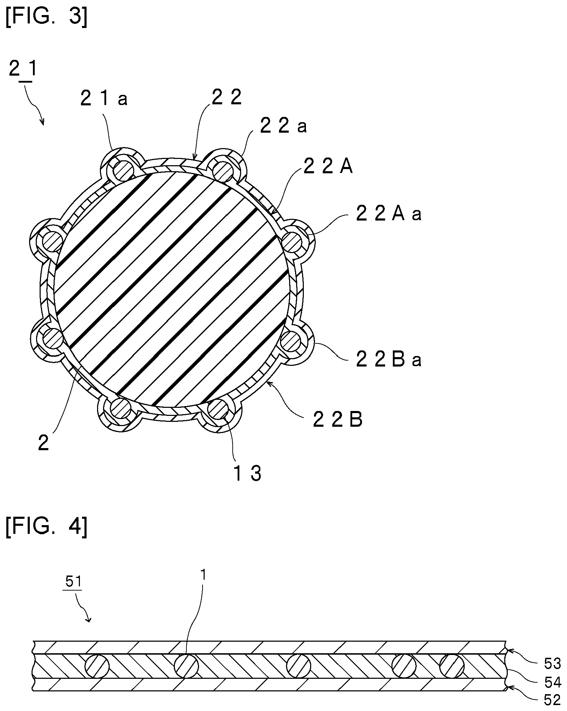

Fig. 3 is a sectional view schematically showing the electroconductive particle according to a third embodiment of the present invention.

An electroconductive particle 21 shown in Fig. 3 includes the base particle 2, an electroconductive portion 22, and the plurality of core materials 13. The electroconductive portion 22 as a whole has a first electroconductive portion 22A on the base particle 2 side and a second electroconductive portion 22B on a side opposite to the base particle 2 side.

The electroconductive particle 11 and the electroconductive particle 21 are different from each other only in the electroconductive portion. That is, while the electroconductive portion 12 having a single layer structure is formed in the electroconductive particle 11, the first electroconductive portion 22A and the second electroconductive portion 22B, which have a double layer structure, are formed in the electroconductive particle 21. The first electroconductive portion 22A and the second electroconductive portion 22B are formed as different electroconductive portions.

The first electroconductive portion 22A is disposed on the surface of the base particle 2. The first electroconductive portion 22A is disposed between the base particle 2 and the second electroconductive portion 22B. The first electroconductive portion 22A is in contact with the base particle 2. Therefore, the first electroconductive portion 22A is disposed on the surface of the base particle 2, and the second electroconductive portion 22B is disposed on a surface of the first electroconductive portion 22A. The electroconductive particle 21 has a plurality of protrusions 21a on the surface. The electroconductive portion 22 has a plurality of protrusions 22a on an outer surface. The first electroconductive portion 22A has a plurality of protrusions 22Aa on an outer surface. The second electroconductive portion 22B has a plurality of protrusions 22Ba on the outer surface. In the electroconductive particle 21, the electroconductive portion 22 is a two-layer electroconductive portion (electroconductive layer).

The electroconductive particle is suitably used for a current collector (use of the electroconductive particle for a current collector). The electroconductive particle is suitably used for a battery (use of the electroconductive particle for a battery). The electroconductive particle is suitably used for the current collector contained in the battery (use of the electroconductive particle for the current collector contained in the battery). The electroconductive particle is suitably used for a bipolar battery (use of the electroconductive particle for the bipolar battery), and more suitably used for the bipolar battery of an automobile (use of the electroconductive particle for the bipolar battery of the automobile). The electroconductive particle is suitably used for the current collector contained in the battery, particularly suitably used for the current collector contained in the bipolar battery, and most suitably used for the current collector contained in the bipolar battery of the automobile. In these preferred embodiments, the current collector is preferably the current collector included in the battery including a first metal foil, a second metal foil, and a connection portion connecting the first metal foil and the second metal foil. The electroconductive particle is preferably used for electrically connecting the first metal foil and the second metal foil (use of the electroconductive particle for electrically connecting the first metal foil and the second metal foil).

Hereinafter, other details of the electroconductive particles will be described. In the following description, "(meth)acryl" means one or both of "acryl" and "methacryl", and "(meth)acrylate" means one or both of "acrylate" and "methacrylate".

### [Base particle]

Examples of the base particle include resin particles, inorganic particles excluding metal particles, organic-inorganic hybrid particles, and metal particles. The base particle may be a core-shell particle including a core and a shell disposed on a surface of the core. The core may be an organic core. The shell may be an inorganic shell. Since the effect of the present invention is more excellent, the base particle is preferably a resin particle or an organic-inorganic hybrid particle, and more preferably a resin particle.

The base particle is preferably a resin particle formed of a resin. When the metal foils are electrically connected to each other using the electroconductive particles, the electroconductive particles are disposed on a first metal foil, and then the second metal foil is stacked from a surface of the electroconductive particles on a side opposite to the first metal foil to compress the electroconductive particles. When the base particle is a resin particle, the electroconductive particle is easily deformed during the stacking, and the contact area between the electroconductive particle and the metal foil increases. Thus, the initial connection resistance between the metal foils can be further lowered, and the connection resistance after a conduction test in a high-temperature and high-humidity environment can be further lowered (conduction reliability can be further enhanced).

Various organic substances are suitably used as a resin which is a material of the resin particle. Examples of the resin as the material of the resin particle include polyolefin resins such as polyethylene, polypropylene, polystyrene, polyvinyl chloride, polyvinylidene chloride, polyisobutylene, and polybutadiene; acrylic resins such as polymethyl methacrylate and polymethyl acrylate; polyalkylene terephthalate, polycarbonate, polyamide, phenol formaldehyde resin, melamine formaldehyde resin, benzoguanamine formaldehyde resin, urea formaldehyde resin, phenol resin, melamine resin, benzoguanamine resin, urea resin, epoxy resin, unsaturated polyester resin, saturated polyester resin, polysulfone, polyphenylene oxide, polyacetal, polyimide, polyamideimide, polyether ether ketone, polyether sulfone, and polymers obtained by polymerizing one or two or more of various polymerizable monomers having an ethylenically unsaturated group. Since the hardness of the base particle can be easily controlled within a preferable range, the resin for forming the resin particle is preferably a polymer obtained by polymerizing one or two or more polymerizable monomers having a plurality of ethylenically unsaturated groups.

When the resin particle is obtained by polymerizing a polymerizable monomer having an ethylenically unsaturated group, examples of the polymerizable monomer having an ethylenically unsaturated group include non-crosslinkable monomers and crosslinkable monomers.

Examples of the non-crosslinkable monomers include styrene-based monomers such as styrene and α-methylstyrene; carboxyl group-containing monomers such as (meth)acrylic acid, maleic acid and maleic anhydride; alkyl (meth)acrylate compounds such as methyl (meth)acrylate, ethyl (meth)acrylate, propyl (meth)acrylate, butyl (meth)acrylate, 2-ethylhexyl (meth)acrylate, lauryl (meth)acrylate, cetyl (meth)acrylate, stearyl (meth)acrylate, cyclohexyl (meth)acrylate, and isobornyl (meth)acrylate; oxygen atom-containing (meth)acrylate compounds such as 2-hydroxyethyl (meth)acrylate, glycerol (meth)acrylate, polyoxyethylene (meth)acrylate, and glycidyl (meth)acrylate; nitrile-containing monomers such as (meth)acrylonitrile; and halogen-containing monomers such as trifluoromethyl (meth)acrylate, pentafluoroethyl (meth)acrylate, vinyl chloride, vinyl fluoride, and chlorostyrene.

Examples of the crosslinkable monomers include polyfunctional (meth)acrylate compounds such as tetramethylolmethane tetra(meth)acrylate, tetramethylolmethane tri(meth)acrylate, tetramethylolmethane di(meth)acrylate, trimethylolpropane tri(meth)acrylate, dipentaerythritol hexa(meth)acrylate, dipentaerythritol penta(meth)acrylate, glycerol tri(meth)acrylate, glycerol di(meth)acrylate, (poly)ethylene glycol di(meth)acrylate, (poly)propylene glycol di(meth)acrylate, (poly)tetramethylene glycol di(meth)acrylate, and 1,4-butanediol di(meth)acrylate; and silane-containing monomers such as triallyl (iso)cyanurate, triallyl trimellitate, divinylbenzene, diallyl phthalate, diallyl acrylamide, diallyl ether, γ-(meth)acryloxy propyl trimethoxy silane, trimethoxy silyl styrene, and vinyltrimethoxysilane.

The resin particle can be obtained by polymerizing the polymerizable monomer having an ethylenically unsaturated group by a known method. Examples of this method include a method of suspension polymerization in the presence of a radical polymerization initiator, and a method of swelling and polymerizing monomers together with a radical polymerization initiator using non-crosslinked seed particles.

When the base particle is an inorganic particle or an organic-inorganic hybrid particle excluding metal particles, examples of the inorganic substance as the material of the base particle include silica and carbon black. It is preferable that the inorganic substance is not a metal. The particles formed of the silica are not particularly limited, and examples thereof include particles obtained by hydrolyzing a silicon compound having two or more hydrolyzable alkoxysilyl groups to form crosslinked polymer particles and then performing firing as necessary. Examples of the organic-inorganic hybrid particles include organic-inorganic hybrid particles formed of crosslinked alkoxysilyl polymer and an acrylic resin.

When the base particle is a metal particle, examples of the metal as the material of the metal particle include silver, copper, nickel, silicon, gold and titanium. However, the base particle is preferably not a metal particle, and is preferably not a copper particle.

The material of the base particle preferably contains a crosslinkable monomer. In this case, the effect of the present invention can be more effectively exhibited. The crosslinkable monomer preferably contains divinylbenzene, polytetramethylene glycol diacrylate, or vinyltrimethoxysilane, and is more preferably divinylbenzene, polytetramethylene glycol diacrylate, or vinyltrimethoxysilane, because the effect of the present invention can be more effectively exhibited.

The total content of the crosslinkable monomer in 100% by weight of the material of the base particles is preferably 3% by weight or more, more preferably 5% by weight or more, still more preferably 10% by weight or more, particularly preferably 80% by weight or more, and preferably 100% by weight or less, more preferably 95% by weight or less, and still more preferably 90% by weight or less. When the content of the crosslinkable monomer is the above lower limit or more and the above upper limit or less, the effect of the present invention can be more effectively exhibited.

The compressive modulus (10% K value) when the base particle is 10% compressed is preferably 100 N/mm² or more, more preferably 150 N/mm² or more, still more preferably 200 N/mm² or more, and particularly preferably 250 N/mm² or more. When the 10% K value of the base particle is the above lower limit or more, the hardness of the resulting electroconductive particles can be improved, when the metal foils are connected to each other using the electroconductive particles, the contact area between the electroconductive particles and the metal foil becomes suitable, and the initial connection resistance can be further lowered. The 10% K value of the base particle is preferably 40000 N/mm² or less, more preferably 35000 N/mm² or less, still more preferably 30000 N/mm² or less, and particularly preferably 25000 N/mm² or less. When the 10% K value of the base particle is the above upper limit or less, the contact area between the electroconductive particles and the metal foil is increased when the metal foils are connected to each other using the resulting electroconductive particles, so that the initial connection resistance between the metal foils can be further reduced, and the connection resistance after the conduction test in a high-temperature and high-humidity environment can be further lowered (conduction reliability can be further enhanced). The range of the 10% K value of the base particle can be set by appropriately selecting the above lower limit value and the above upper limit value.

The compressive modulus (20% K value) at 20% compression of the base particle is preferably 200 N/mm² or more, more preferably 400 N/mm² or more, still more preferably 600 N/mm² or more, and particularly preferably 800 N/mm² or more. When the 20% K value of the base particle is the above lower limit or more, the hardness of the resulting electroconductive particles can be improved, and when the metal foils are connected to each other using the electroconductive particles, the contact area between the electroconductive particles and the metal foil becomes suitable, so that the initial connection resistance can be further lowered. The 20% K value of the base particle is preferably 40000 N/mm² or less, more preferably 35000 N/mm² or less, still more preferably 30000 N/mm² or less, and particularly preferably 25000 N/mm² or less. When the 20% K value of the base particle is the above upper limit or less, the contact area between the electroconductive particles and the metal foil is increased when the metal foils are connected to each other using the resulting electroconductive particles, so that the initial connection resistance between the metal foils can be further reduced, and the connection resistance after the conduction test in a high-temperature and high-humidity environment can be further lowered (conduction reliability can be further enhanced). The range of the 20% K value of the base particle can be set by appropriately selecting the above lower limit value and the above upper limit value.

A value (30% K value) of the compressive modulus when the base particle is 30% compressed is preferably 300 N/mm² or more, more preferably 500 N/mm² or more, still more preferably 700 N/mm² or more, and particularly preferably 900 N/mm² or more. When the 30% K value of the base particle is the above lower limit or more, the hardness of the resulting electroconductive particles can be improved, and when the metal foils are connected to each other using the electroconductive particles, the contact area between the electroconductive particles and the metal foil becomes suitable, so that the initial connection resistance can be further lowered. The 30% K value of the base particle is preferably 40000 N/mm² or less, more preferably 35000 N/mm² or less, still more preferably 30000 N/mm² or less, and particularly preferably 25000 N/mm² or less. When the 30% K value of the base particle is the above upper limit or less, the contact area between the electroconductive particles and the metal foil is increased when the metal foils are connected to each other using the resulting electroconductive particles, so that the initial connection resistance between the metal foils can be further reduced, and the connection resistance after the conduction test in a high-temperature and high-humidity environment can be further lowered (conduction reliability can be further enhanced). The range of the 30% K value of the base particle can be set by appropriately selecting the above lower limit value and the above upper limit value.

The particle diameter of the base particle is preferably 0.1 µm or more, more preferably 1.0 µm or more, still more preferably 1.5 µm or more, and particularly preferably 2.0 µm or more. The particle diameter of the base particle is preferably 500 µm or less, more preferably 300 µm or less, still more preferably 50 µm or less, even more preferably 30 µm or less, particularly preferably 10 µm or less, and most preferably 5.0 µm or less. When the particle diameter of the base particle is the above lower limit or more, the contact area between the conductive particles and the metal foil is increased when the metal foils are connected to each other using the resulting electroconductive particles, so that the initial connection resistance between the metal foils can be further reduced, and the connection resistance after the conduction test in a high-temperature and high-humidity environment can be further lowered (conduction reliability can be further enhanced). In addition, when the electroconductive portion is formed on the surface of the base particle by electroless plating, the base particle is hardly aggregated, and aggregated electroconductive particles are hardly formed. When the particle diameter of the base particle is the above upper limit or less, the electroconductive particles are easily compressed sufficiently, the connection resistance between the metal foils is further lowered, and the interval between the metal foils is reduced.

The particle diameter of the base particle indicates the number average particle diameter. The particle diameter of the base particle is determined using a particle size distribution measurement apparatus or the like. The particle diameter of the base particle is preferably determined by observing arbitrary 50 base particles with an electron microscope or an optical microscope and calculating an average value. In the observation with the electron microscope or the optical microscope, the particle diameter of the base particle per particle is determined as a particle diameter corresponding to an equivalent circle diameter. In the observation with the electron microscope or the optical microscope, the average particle diameter obtained from the equivalent circle diameters of arbitrary 50 base particles is substantially equal to the average particle diameter corresponding to an equivalent sphere diameter. In the particle size distribution measurement apparatus, the particle diameter of the base particle per particle is determined as a particle diameter corresponding to an equivalent sphere diameter. The particle diameter of the base particle is preferably calculated by the particle size distribution measurement apparatus. In the case of measuring the particle diameter of the base particle in the electroconductive particle, for example, the particle diameter can be measured as follows.

The electroconductive particles are added to and dispersed in "Technovit 4000" manufactured by Kulzer GmbH so as to have a content of 30% by weight, thereby fabricating an embedded resin body for inspection of electroconductive particles. The cross section of the electroconductive particle is cut out so as to pass near the center of the base particle in the electroconductive particle dispersed in the embedded resin body using an ion milling apparatus ("IM4000" manufactured by Hitachi High-Technologies Corporation). Then, using a field emission scanning electron microscope (FE-SEM "S-4800" manufactured by Hitachi High-Technologies Corporation) and an EDX apparatus ("X-MaxN80" manufactured by HORIBA, Ltd.), an image magnification is set to 6000 times, 50 electroconductive particles are randomly selected, the base particle of each electroconductive particle is observed, and an SEM image and an element mapping image are obtained. The particle diameter of the base particle in each electroconductive particle is measured, and the particle diameters are arithmetically averaged to determine the particle diameter of the base particle.

An average value of circularity of the base particle is preferably 0.85 or more, more preferably 0.89 or more, still more preferably 0.90 or more, particularly preferably 0.91 or more, and preferably 1.00 or less. When the average value of the circularity of the base particle is the above lower limit or more and the above upper limit or less, the effect of the present invention can be more effectively exhibited.

The average value of the circularity of the base particle can be determined by determining the circularity of the plurality of base particles by the method described below and averaging the obtained circularity values. Among the element mapping images obtained by the method of measuring the average particle diameter of the base particles, a mapping image of main elements included in the base particles is prepared. The mapping image of the main element is analyzed with image processing software Image J Fiji (Open-Source Software, version information ImageJ 2.14.0/1.54f, Java 1.8.0_322 (64-bit)). The analysis procedure is performed, for example, as follows. 1)Duplicate, 2)Subtract Background, 3)Auto Threshold, 4)Fill Holes, 5)Shape Smoothing, 6)Open, 7)Watershed, 8)Analyze Particles. In each procedure, 2) in Subtract Background, Rolling Ball Radius is set to a suitable value according to the size of particles in the image, 3) in Auto Threshold, Otsu is set to Method, 5) in Shape Smoothing, relative_proportion_fds is set to 8, 6) in Open, iterations sets 1 count, and 8) in Analyze Particles, a suitable size is set according to the size of particles in the image. The area, perimeter, circularity, and the like of the particle are calculated by the analysis. The circularity is obtained by the following formula.$Circularity = 4 π \times \left(area\right) \div {\left(perimeter\right)}^{2}$

Examples of a method of increasing the average value of the circularity of the base particle include the following methods. 1) A method of producing a base particle with a suitable stirring force (a method of suppressing fission and aggregation at the time of producing the base particle, etc.). 2) A method of producing a base particle in a suitable interface environment (a method of suitably selecting a hydrophilic material and a hydrophobic material, etc.). 3) A method of increasing a swelling ratio at the time of producing the base particle (a method of solidifying the particle after sufficiently expanding the base particle, etc.).

Variation in circularity of the base particle is preferably 0 or more, and preferably 0.05 or less, more preferably 0.04 or less, still more preferably 0.03 or less. When the variation in circularity of the base particle is the above lower limit or more and the above upper limit or less, the effect of the present invention can be more effectively exhibited.

The variation in circularity of the base particle is a standard deviation of the circularity and is determined by the following formula. [Mathematical formula 1] $s = \sqrt{\frac{1}{n} {\sum }_{i = 1}^{n} {\left({x}_{i}-\overline{x}\right)}^{2}}$
s: Variation in circularity
n: Total number of data
xi: Circularity of individual base particle
x: Average value of circularity

Examples of the method of reducing the circularity of the base particle include the methods mentioned as the method of increasing the average value of the circularity of the base particle.

### [Electroconductive portion]

The metal for forming the electroconductive portion is not particularly limited. Examples of the metal include gold, silver, palladium, copper, platinum, zinc, iron, tin, lead, ruthenium, aluminum, cobalt, indium, nickel, chromium, titanium, antimony, bismuth, thallium, germanium, cadmium, silicon, and alloys of these. The metal may be tin-doped indium oxide (ITO) or solder. The metal is preferably tin, nickel, palladium, copper, silver, gold, or an alloy containing tin, and more preferably nickel, from the viewpoint of further lowering the initial connection resistance and further enhancing the conduction reliability when the metal foils are connected to each other using the electroconductive particles.

Like the electroconductive particles 1 and 11 shown in Figs. 1 and 2, the electroconductive portion may be formed of one layer. Like the electroconductive particle 21 shown in Fig. 3, the electroconductive portion may be formed of a plurality of layers. The electroconductive portion may have a single-layer structure or a laminated structure of two or more layers. When the electroconductive portion is formed of a plurality of layers, an outermost layer is preferably a gold layer, a silver layer, a nickel layer, a palladium layer, a ruthenium layer, a tin layer, or a copper layer, and more preferably a gold layer, a silver layer, or a nickel layer. When the outermost layer is these preferred electroconductive layers, the initial connection resistance can be further lowered and the conduction reliability can be further enhanced when the metal foils are connected to each other using the electroconductive particles. When the outermost layer is a noble metal layer, corrosion resistance is further enhanced.

A method of forming the electroconductive portion on the surface of the base particle is not particularly limited. Examples of the method of forming the electroconductive portion include a method by electroless plating, a method by electroplating, a method by physical vapor deposition, and a method of coating paste containing a metal powder or paste containing a metal powder and a binder on the surface of the base particle. Since the formation of the electroconductive portion is simple, the method of forming the electroconductive portion is preferably the method by electroless plating. Examples of the method by physical vapor deposition include methods of vacuum deposition, ion plating, and ion sputtering.

The thickness of the electroconductive portion (the thickness of the entire electroconductive portion) is preferably 10 nm or more, more preferably 100 nm or more, still more preferably 120 nm or more, and preferably 1000 nm or less, more preferably 500 nm or less, still more preferably 300 nm or less, particularly preferably 250 nm or less, most preferably 200 nm or less. The thickness of the electroconductive portion is the thickness of the entire electroconductive layer when the electroconductive portion has multiple layers. When the thickness of the electroconductive portion is the above lower limit or more and the above upper limit or less, sufficient electroconductivity is obtained, and the electroconductive particle is sufficiently deformed when the metal foils are connected to each other so that the electroconductive particle does not become too hard.

When the electroconductive portion is formed of a plurality of layers, the thickness of the electroconductive layer of the outermost layer is preferably 1 nm or more, more preferably 10 nm or more, and preferably 500 nm or less, more preferably 200 nm or less. When the thickness of the electroconductive layer as the outermost layer is the above lower limit or more and the above upper limit or less, the corrosion resistance becomes sufficiently high, and the connection resistance between the metal foils is further lowered. When the outermost layer is a gold layer, the thinner the gold layer, the lower the cost.

The thickness of the electroconductive portion can be measured, for example, by observing the cross section of the electroconductive particle using a transmission electron microscope (TEM).

From the viewpoint of effectively enhancing the electroconductivity, the electroconductive portion preferably contains nickel. From the viewpoint of effectively enhancing the electroconductivity, the electroconductive particle preferably has an electroconductive portion containing nickel. In 100% by weight of the electroconductive portion containing nickel, the content of nickel is preferably 50% by weight or more, more preferably 65% by weight or more, still more preferably 70% by weight or more, even more preferably 75% by weight or more, further more preferably 80% by weight or more, particularly preferably 85% by weight or more, and most preferably 90% by weight or more. The content of nickel in 100% by weight of the electroconductive portion containing nickel is preferably 100% by weight (total amount) or less, and may be 99% by weight or less or 95% by weight or less. When the content of nickel is the above lower limit or more, the connection resistance between the metal foils is further lowered. When an amount of an oxide film on the surface of the metal foil or the electroconductive portion is small, the connection resistance between the metal foils tends to be lowered as the content of nickel increases. The range of the content of nickel in 100% by weight of the electroconductive portion containing nickel can be set by appropriately selecting the above lower limit value and the above upper limit value.

As a method of measuring the content of the metal contained in the electroconductive portion, various known analysis methods can be used. Examples of the method of measuring the content of the metal contained in the electroconductive portion include an absorption spectrophotometry and a spectral analysis method. In the absorption spectrophotometry, a flame atomic absorption spectrometer, a graphite furnace atomic absorption spectrophotometer, and the like can be used. Examples of the spectral analysis method include inductively coupled plasma emission spectrometry and inductively coupled plasma ion source mass spectrometry.

An average content of the metal contained in the electroconductive portion can be measured using, for example, an ICP emission spectrometer. Examples of commercially available products of the ICP emission spectrometer include "ICP emission spectrometer" manufactured by HORIBA, Ltd.

The electroconductive portion may contain phosphorus or boron in addition to nickel. The electroconductive portion may contain a metal other than nickel. When a plurality of metals are contained in the electroconductive portion, the plurality of metals may be alloyed.

In 100% by weight of the electroconductive portion containing nickel and phosphorus or boron, the content of phosphorus or boron is preferably 0.1% by weight or more, more preferably 0.5% by weight or more, and preferably 10% by weight or less, more preferably 5% by weight or less. When the content of phosphorus or boron is the above lower limit or more and the above upper limit or less, the initial connection resistance can be further lowered and the conduction reliability can be further enhanced when the electroconductive portion is used for the electrical connection between the metal foils.

From the viewpoint of further enhancing the conduction reliability when the electroconductive portion is used for the electrical connection between the metal foils, the electroconductive portion preferably contains a rust inhibitor. From the viewpoint of further enhancing the conduction reliability when the electroconductive portion is used for the electrical connection between the metal foils, the electroconductive portion is preferably rustproofed.

Examples of the rust inhibitor include a sulfonic acid-based rust inhibitor, a carboxylic acid-based rust inhibitor, and a phosphoric acid ester-based rust inhibitor. One kind of the rust inhibitors may be used alone, and two or more kinds thereof may be used in combination.

From the viewpoint of further enhancing the conduction reliability when the rust inhibitor is used for the electrical connection between the metal foils, the rust inhibitor preferably contains a sulfonic acid-based rust inhibitor or a phosphoric acid ester-based rust inhibitor, and more preferably contains a phosphoric acid ester-based rust inhibitor. From the viewpoint of further enhancing the conduction reliability when the electroconductive portion is used for the electrical connection between the metal foils, the electroconductive portion is preferably rustproofed with a sulfonic acid-based rust inhibitor or a phosphoric acid ester-based rust inhibitor, and more preferably rustproofed with a phosphoric acid ester-based rust inhibitor.

### [Core material]

From the viewpoint of further lowering the connection resistance and further enhancing the conduction reliability, the electroconductive particle preferably has a plurality of protrusions on the outer surface of the electroconductive portion. Furthermore, the electroconductive particle preferably includes a plurality of core materials that raise the outer surface of the electroconductive portion so as to form the plurality of protrusions in the electroconductive portion. The electroconductive particle may not have a protrusion on the outer surface of the electroconductive layer.

Since the core material is embedded in the electroconductive portion, it is easy for the electroconductive portion to have the plurality of protrusions on the outer surface. However, in order to form protrusions on the surfaces of the electroconductive particles and the surfaces of the electroconductive portions, the core material may not necessarily be used.

Examples of a method of forming the protrusion include the following methods. A method in which a core material is attached to the surface of the base particle, and then an electroconductive portion is formed by electroless plating. A method in which an electroconductive portion is formed on the surface of the base particle by electroless plating, then a core material is attached, and an electroconductive portion is further formed by electroless plating. A method in which a core material is added at an intermediate stage of forming an electroconductive portion on the surface of the base particle by electroless plating.

Examples of the material of the core material include an electroconductive substance and a non-electroconductive substance. Examples of the electroconductive substance include metals, metal oxides, electroconductive nonmetals such as graphite, and electroconductive polymers. Examples of the electroconductive polymer include polyacetylene. Examples of the non-electroconductive substance include silica, alumina, tungsten carbide, titanium oxide, barium titanate, and zirconia. As the metal as the material of the core material, the metals mentioned as the material of the electroconductive material can be appropriately used.

Examples of the material of the core material include barium titanate (Mohs hardness: 4.5), nickel (Mohs hardness: 5), silica (silicon dioxide, Mohs hardness: 6 to 7), titanium oxide (Mohs hardness: 7), zirconia (Mohs hardness: 8 to 9), alumina (Mohs hardness: 9), tungsten carbide (Mohs hardness: 9), and diamond (Mohs hardness: 10). The inorganic particles are preferably nickel, silica, titanium oxide, zirconia, alumina, tungsten carbide, or diamond, and more preferably silica, titanium oxide, zirconia, alumina, tungsten carbide, or diamond. The inorganic particles are still more preferably titanium oxide, zirconia, alumina, tungsten carbide, or diamond, and particularly preferably zirconia, alumina, tungsten carbide, or diamond. The Mohs hardness of the material of the core material is preferably 4 or more, more preferably 6 or more, still more preferably 7 or more, and particularly preferably 7.5 or more. When the Mohs hardness of the material of the core material is the above lower limit or more, the 10% K value, the 20% K value, and the 30% K value of the electroconductive particle can be easily controlled within suitable ranges.

The shape of the core material is not particularly limited. The shape of the core material is preferably massive. Examples of the core material include a lump in particle form, an agglomerate by agglomeration of a plurality of microparticles, and an amorphous lump.

The average particle diameter of the core material is preferably 0.001 µm or more, more preferably 0.05 µm or more, and preferably 0.9 µm or less, more preferably 0.2 µm or less. When the average particle diameter of the core material is the above lower limit or more and the above upper limit or less, the connection resistance between the metal foils is effectively lowered.

The average particle diameter of the core material is preferably a number average particle diameter. The average particle diameter of the core material is determined by observing arbitrary 50 core materials with an electron microscope or an optical microscope and calculating an average value.

The number of the protrusions per electroconductive particle is preferably 3 or more, and more preferably 5 or more. The upper limit of the number of protrusions is not particularly limited. The upper limit of the number of protrusions can be appropriately selected in consideration of the particle diameter of the electroconductive particle and the like.

From the viewpoint of further lowering the initial connection resistance and further enhancing the conduction reliability when the metal foils are connected to each other using the electroconductive particles, a surface area of a portion having the protrusion is preferably 10% or more, more preferably 30% or more, and preferably 95% or less, more preferably 90% or less in 100% of the total surface area of the electroconductive particles.

The average height of the plurality of protrusions is preferably 0.001 µm or more, more preferably 0.05 µm or more, and preferably 0.9 µm or less, more preferably 0.5 µm or less. When the average height of the protrusions is the above lower limit or more and the above upper limit or less, the connection resistance between the metal foils is effectively lowered.

### [Insulating substance]

The electroconductive particle may or may not include the insulating substance disposed on the surface of the electroconductive portion. From the viewpoint of more effectively exhibiting the effect of the present invention, it is preferable that the electroconductive particle does not include the insulating substance.

Examples of the material of the insulating substance include polyolefins, a (meth)acrylate polymer, a (meth)acrylate copolymer, a block polymer, a thermoplastic resin, a crosslinked product of a thermoplastic resin, a thermosetting resin and a water-soluble resin.

### (Electroconductive material)

The electroconductive material according to the present invention contains the electroconductive particle described above and a binder resin. The electroconductive particles are preferably dispersed in the binder resin and used as the electroconductive material. The electroconductive material is preferably an electroconductive material for metal foil connection. Each of the electroconductive particle and the electroconductive material is preferably used for the electrical connection between the metal foils. Each of the electroconductive particle and the electroconductive material is suitably used for the electrical connection between the metal foils of the connection structure and the current collector. The electroconductive material is different from an anisotropic electroconductive material.

It is preferable that the electroconductive material does not contain the electroconductive particles having a particle diameter of 2.0 times or more and 5.0 times or less the average particle diameter of the electroconductive particles, or contains 0.1% by weight or less of the electroconductive particles having a particle diameter of 2.0 times or more and 5.0 times or less the average particle diameter of the electroconductive particles in 100% by weight of the electroconductive particles in the electroconductive material. In this case, the initial connection resistance can be further lowered and the conduction reliability can be further enhanced when the metal foils are connected to each other using the electroconductive material.

The content of the electroconductive particles having a particle diameter of 2.0 times or more and 5.0 times or less the average particle diameter of the electroconductive particles in 100% by weight of the electroconductive particles in the electroconductive material is preferably 0.1% by weight or less, more preferably 0.01% by weight or less, still more preferably 0.001% by weight or less, and most preferably 0% by weight. It is most preferable that the electroconductive material does not contain the electroconductive particles having a particle diameter of 2.0 times or more and 5.0 times or less the average particle diameter of the electroconductive particles. In these cases, the initial connection resistance can be further lowered and the conduction reliability can be further enhanced when the metal foils are connected to each other using the electroconductive material.

The binder resin is not particularly limited. The binder resin preferably contains a thermoplastic component (thermoplastic compound) or a curable component and more preferably contains the curable component. Examples of the curable component include a photocurable component and a thermosetting component. The photocurable component preferably contains a photocurable compound and a photoinitiator. The thermosetting component preferably contains a thermosetting compound and a thermosetting agent. Examples of the binder resin include a vinyl resin, a thermoplastic resin, a curable resin, a thermoplastic block copolymer, and an elastomer. One kind of the binder resin may be used alone, and two or more kinds thereof may be used in combination.

Examples of the vinyl resin include a vinyl acetate resin, an acrylic resin, and a styrene resin. Examples of the thermoplastic resin include a polyolefin resin, an ethylene-vinyl acetate copolymer resin, and a polyamide resin. Examples of the curable resin include an epoxy resin, a urethane resin, a polyimide resin, and an unsaturated polyester resin. The curable resin may be a room temperature curable resin, a thermosetting resin, a photo-curable resin, or a moisture-curable resin. Examples of the thermoplastic block copolymer include a styrene-butadiene-styrene block copolymer, a styrene-isoprene-styrene block copolymer, a hydrogenated styrene-butadiene-styrene block copolymer, and a hydrogenated styrene-isoprene-styrene block copolymer. Examples of the elastomer include a styrene-butadiene copolymer rubber and an acrylonitrile-styrene block copolymer rubber.

The electroconductive material and the binder resin preferably contain a thermoplastic component or a thermosetting component. The electroconductive material and the binder resin may contain the thermoplastic component and/or the thermosetting component. The electroconductive material and the binder resin preferably contain the thermosetting component. The thermosetting component preferably contains a curable compound curable by heating and a thermosetting agent. The thermosetting agent is preferably a thermal cationic curing initiator. The curable compound curable by heating and the thermosetting agent are used at an appropriate blending ratio so that the binder resin is cured. When the binder resin contains a thermal cationic curing initiator, an acid is likely to be contained in the cured product. However, by using the electroconductive particle according to the present invention, when the metal foils are connected to each other using the electroconductive material, the initial connection resistance can be further lowered, and the conduction reliability can be further enhanced.

The electroconductive material may contain various additives such as a filler, an extender, a softener, a plasticizer, a polymerization catalyst, a curing catalyst, a colorant, an antioxidant, a thermal stabilizer, a light stabilizer, an ultraviolet absorber, a lubricant, an antistatic agent, and a flame retardant.

The electroconductive material may be used as an electroconductive paste, an electroconductive film, or the like. When the electroconductive material is a conductive film, a film not containing an electroconductive particle may be stacked on the electroconductive film containing the electroconductive particle. The conductive paste is preferably a metal foil connection conductive paste. The conductive paste is different from an anisotropic conductive paste. The conductive film is preferably a metal foil connection conductive film. The conductive film is different from an anisotropic conductive film.

The content of the binder resin in 100% by weight of the electroconductive material is preferably 10% by weight or more, more preferably 30% by weight or more, still more preferably 50% by weight or more, particularly preferably 70% by weight or more, and preferably 99.99% by weight or less, more preferably 99.9% by weight or less. When the content of the binder resin is the above lower limit or more and the above upper limit or less, the electroconductive particles are efficiently arranged between the metal foils, and the conduction reliability between the metal foils is further enhanced.

The content of the electroconductive particles in 100% by weight of the electroconductive material is preferably 0.01% by weight or more, more preferably 0.1% by weight or more, and preferably 80% by weight or less, more preferably 60% by weight or less, further preferably 40% by weight or less, particularly preferably 20% by weight or less, most preferably 10% by weight or less. When the content of the electroconductive particles is the above lower limit or more and the above upper limit or less, the conduction reliability between the metal foils is further enhanced.

### (Connection structure)

A connection structure can be obtained by connecting the metal foils to each other using the electroconductive particles or the electroconductive material containing the electroconductive particles and the binder resin.

A connection structure according to the present invention includes a first metal foil, a second metal foil, and a connection portion connecting the first metal foil and the second metal foil, and a material of the connection portion includes the above-described electroconductive particles. In the connection structure, the first metal foil and the second metal foil are electrically connected by the electroconductive particles. Since the connection structure according to the present invention has the above-described configuration, 1) dispersibility of the electroconductive particles in the connection portion can be enhanced, 2) breakage of the metal foil can be suppressed, 3) the initial connection resistance can be lowered, and 4) the conduction reliability can be enhanced.

The connection structure is suitably used as a current collector. The connection structure is suitably used for a battery. The connection structure is suitably used for a bipolar battery, and more suitably used for a bipolar battery of an automobile. The connection structure is suitably used as the current collector contained in the battery, particularly suitably used as the current collector contained in the bipolar battery, and most suitably used as the current collector contained in the bipolar battery of the automobile.

Fig. 4 is a sectional view schematically showing the connection structure (current collector) using the electroconductive particles shown in Fig. 1.

A connection structure (current collector) 51 illustrated in Fig. 4 includes a first metal foil 52, a second metal foil 53, and a connection portion 54 connecting the first metal foil 52 and the second metal foil 53. The connection portion 54 is formed by curing the material of the connection portion containing the electroconductive particles 1. In Fig. 4, the electroconductive particle 1 is schematically shown for convenience of illustration. The electroconductive particles 11 and 21 may be used in place of the electroconductive particle 1. In the connection structure 51, the first metal foil 52 and the second metal foil 53 are electrically connected by one or the plurality of electroconductive particles 1.

A method of manufacturing the connection structure (current collector) preferably includes the following steps (1) to (4). (1) A first disposing step of disposing the material of the connection portion on the surface of the first metal foil. (2) A drying step of drying the material of the connection portion. (3) A second disposing step of disposing the second metal foil on a surface of the material of the connection portion opposite to the first metal foil. (4) A connecting step of forming the connection portion by heating the material of the connection portion, and electrically connecting the first metal foil and the second metal foil by the electroconductive particles in the connection portion.

In the method of manufacturing the connection structure, the material of the connection portion includes the electroconductive particles described above. The material of the connection portion may be the electroconductive material described above.

In the first disposing step, a method of disposing the material of the connection portion is not particularly limited. Examples of a method of disposing the material of the connection portion include a roll coating method, a gravure coating method, a spin coating method, and a bar coating method.

In the drying step, examples of a method of drying the material of the connection portion include natural drying, freeze drying, and heat drying. In the drying step, the material of the connection portion is preferably dried by heating and drying.

In the drying step, when the material of the connection portion is dried by heating and drying, the heating temperature is preferably 30°C or higher, more preferably 50°C or higher, and preferably 450°C or lower, more preferably 350°C or lower. In the drying step, when the material of the connection portion is dried by heating and drying, the heating time is preferably 0.1 minutes or more, more preferably 1 minute or more, and preferably 200 minutes or less, more preferably 100 minutes or less.

In the connecting step, when the material of the connection portion contains a thermosetting component, it is preferable to heat the material of the connection portion to a temperature equal to or higher than a curing temperature of the thermosetting component. As a result, the connection portion connecting the first metal foil and the second metal foil can be formed of the material of the connection portion.

The heating temperature in the connecting step is preferably 100°C or higher, more preferably 150°C or higher, and preferably 400°C or lower, more preferably 300°C or lower, still more preferably 250°C or lower. When the heating temperature in the connecting step is the above lower limit or more and the above upper limit or less, the electrical connection between the metal foils can be improved.

The heating time in the connecting step is not particularly limited. The heating time in the connecting step may be 2 seconds or more, 15 seconds or less, 10 seconds or less, 9 seconds or less, or 7 seconds or less.

In the present embodiment, it is preferable not to perform pressurization in the second disposing step and the connecting step. In this case, the weight of the second metal foil is added to the material of the connection portion. Thus, breakage of the metal foil can be suppressed at the time of forming the connection portion.

Thus, the connection structure (current collector) 51 shown in Fig. 4 is obtained. The second disposing step and the connecting step may be performed continuously. After the second disposing step is performed, the connecting step may be performed by moving the resulting laminate of the first metal foil, the material of the connection portion, and the second metal foil to a heating unit. In order to perform the heating, the laminate may be placed on a heating member, and the laminate may be placed in a heated space.

Examples of the metal used for the metal foil include gold, silver, palladium, copper, platinum, zinc, iron, tin, lead, ruthenium, aluminum, cobalt, indium, nickel, chromium, titanium, antimony, bismuth, thallium, germanium, cadmium, silicon, and alloys of these. The metal used for the metal foil may be stainless steel, tin-doped indium oxide (ITO), or solder.

From the viewpoint of further lowering the initial connection resistance and further enhancing the conduction reliability, the metal used for the metal foil is preferably gold, silver, copper, tin, aluminum, nickel, titanium, or stainless steel, and more preferably copper or aluminum. From the viewpoint of further lowering the initial connection resistance and further enhancing the conduction reliability, each of the first metal foil and the second metal foil preferably contains gold, silver, copper, tin, aluminum, nickel, titanium, or stainless steel, and more preferably contains copper or aluminum. The metals used for the first and second metal foils may be the same or different.

In the method of manufacturing the connection structure, preferably, the first metal foil and the second metal foil are elongated, and in the first disposing step, the drying step, the second disposing step, and the connecting step, the elongated first metal foil and the elongated second metal foil are conveyed by a roll-to-roll method to manufacture the connection structure. In this case, a long connection structure can be manufactured, and manufacturing efficiency of the connection structure can be further enhanced.

When the roll-to-roll method is used, the conveyance speeds of the first metal foil and the second metal foil are not particularly limited.

The shapes of the first metal foil and the second metal foil are not particularly limited. From the viewpoint of manufacturing the connection structure by the roll-to-roll method, the first metal foil and the second metal foil are preferably elongated. The lengths of the first metal foil and the second metal foil are not particularly limited. The lengths of the first metal foil and the second metal foil may be 1 m or more, 10 m or more, 5000 m or less, or 1000 m or less.

The thickness of each of the first metal foil and the second metal foil is preferably 1 µm or more, more preferably 3 µm or more, still more preferably 5 µm or more, and preferably 100 µm or less, more preferably 80 µm or less, still more preferably 50 µm or less. When the thicknesses of the first metal foil and the second metal foil are the above lower limit or more, breakage of the metal foil can be further suppressed. When the thicknesses of the first metal foil and the second metal foil are the above upper limit or less, the connection structure can be made lightweight, and the battery can be made lightweight when the connection structure is used as a current collector in a battery. The thicknesses of the first metal foil and the second metal foil may be the same or different.

The thickness of the connection portion is preferably 1 µm or more, more preferably 2 µm or more, and preferably 50 µm or less, more preferably 30 µm or less, still more preferably 10 µm or less. When the thickness of the connection portion is the above lower limit or more and the above upper limit or less, an adhesive force between the metal foils can be improved, and the electrical connection between the metal foils can be improved.

### (Current collector)

The current collector according to the present invention is a current collector used for a battery. The current collector according to the present invention is included in a battery and is a part of the battery. The current collector according to the present invention includes a first metal foil, a second metal foil, and a connection portion connecting the first metal foil and the second metal foil, and the material of the connection portion includes the above-described electroconductive particles. In the current collector, the first metal foil and the second metal foil are electrically connected by the electroconductive particles. Since the current collector according to the present invention has the above-described configuration, 1) dispersibility of the electroconductive particles in the connection portion can be enhanced, 2) breakage of the metal foil can be suppressed, 3) the initial connection resistance can be lowered, and 4) the conduction reliability can be enhanced.

The current collector is preferably the connection structure described above. The current collector preferably has the structure of the connection structure (current collector) 51 shown in Fig. 4.

The current collector (connection structure) may be cut into a predetermined size as necessary, or may be cut and used. In the current collector (connection structure), the elongated metal foils are preferably electrically connected to each other by the electroconductive particles. After the elongated metal foils are electrically connected to each other by the electroconductive particles to form an elongated current collector, the elongated current collector (connection structure) may be cut.

The current collector (connection structure) may be stacked and used as necessary. The current collector (connection structure) may be cut into a predetermined size and then stacked and used as necessary. The current collector (connection structure) may be used by stacking two or more layers, may be used by stacking three or more layers, may be used by stacking twenty or less layers, or may be used by stacking ten or less layers.

The current collector is suitably used for a bipolar battery. The current collector is particularly suitably used for the bipolar battery of an automobile. The current collector is preferably used particularly in the bipolar battery of an electric vehicle (BEV) and a hybrid electric vehicle (HEV).

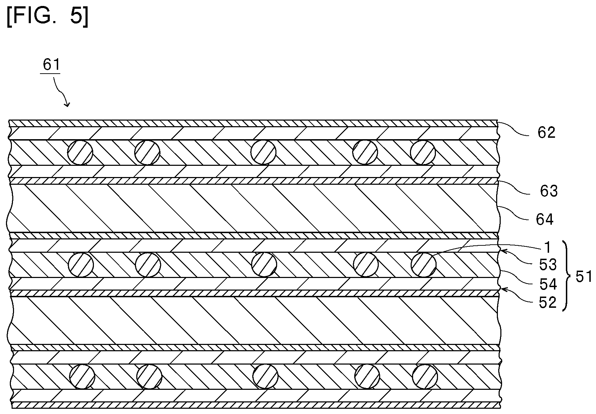

Fig. 5 is a sectional view schematically showing a bipolar battery using the connection structure (current collector) shown in Fig. 4.

A bipolar battery 61 shown in Fig. 5 includes a positive electrode 62, the connection structure (current collector) 51, a negative electrode 63, and an electrolyte layer 64. The connection structure (current collector) 51 includes the first metal foil 52, the second metal foil 53, and the connection portion 54 connecting the first metal foil 52 and the second metal foil 53. The connection portion 54 is formed by curing the material of the connection portion containing the electroconductive particles 1.

The bipolar battery 61 includes the connection structure (current collector) 51 as the current collector.

In the bipolar battery 61, a plurality of the positive electrodes 62, a plurality of the connection structures (current collectors) 51, a plurality of the negative electrodes 63, and a plurality of the electrolyte layers 64 are stacked in the thickness direction.

In the bipolar battery 61, the positive electrode 62, the electrolyte layer 64 stacked on the positive electrode 62, and the negative electrode 63 (that is, the negative electrode 63 disposed on a surface of the electrolyte layer 64 on a side opposite to the positive electrode 62) stacked on the electrolyte layer 64 constitute one single battery layer. In the bipolar battery 61, a plurality of single battery layers are stacked. The current collector 51 is disposed between the single battery layers adjacent to each other.

The positive electrode contains a positive electrode active material. The material of the positive electrode may contain the binder resin described above.

Examples of the positive electrode active material include a lithium compound. Examples of the lithium compound include a lithium-transition metal composite oxide (lithium-based composite oxide), a lithium-transition metal phosphate compound, and a lithium-transition metal sulfate compound. Examples of the lithium-transition metal composite oxide (lithium-based composite oxide) include LiCoO₂, LiNiO₂, and Li(Ni-Co-Mn)O₂.

The negative electrode contains a negative electrode active material. The material of the negative electrode may contain the binder resin described above.

Examples of the negative electrode active material include a carbon active material, a lithium-transition metal composite oxide (for example, Li₄Ti₅O₁₂), a metal active material, and a lithium alloy-based negative electrode active material. Examples of the carbon active material include graphite, soft carbon, and hard carbon.

The electrolyte layer contains an electrolyte. Examples of the electrolyte include a liquid electrolyte and a solid electrolyte.

In the liquid electrolyte, a supporting salt is generally dissolved in an organic solvent. Examples of the supporting salt include lithium salts. Examples of the organic solvent include carbonates. Examples of the carbonate include ethylene carbonate (EC) and propylene carbonate (PC).

Examples of the solid electrolyte include a gel electrolyte containing an electrolytic solution, and an intrinsic solid electrolyte not containing an electrolytic solution.

In the gel electrolyte, generally, the liquid electrolyte is dispersed in a matrix polymer containing an ion conductive polymer.

When the electrolyte layer contains a liquid electrolyte or a gel electrolyte, the electrolyte layer preferably includes a separator. Examples of the separator include a porous membrane formed of polyolefin such as polyethylene or polypropylene.

In the intrinsic solid electrolyte, the supporting salt is generally dissolved in the matrix polymer. The intrinsic solid electrolyte does not contain an organic solvent.

The bipolar battery is preferably a bipolar lithium ion secondary battery.

The current collector may be wound in a roll shape. The shape of the current collector may be a shape of a roll body wound in a roll shape.

When the current collector is wound in a roll shape, the current collector (connection structure) is preferably manufactured by a roll-to-roll method.

In the roll body, the length of the current collector wound in a roll shape is not particularly limited. The length of the current collector may be 1 m or more, 10 m or more, 5000 m or less, or 1000 m or less.

In the roll body, the width of the current collector wound in a roll shape is not particularly limited. The length of the current collector may be 0.3 m or more, 0.5 m or more, 10 m or less, or 5 m or less.

The present invention will be specifically described below by way of Examples and Comparative Examples. The present invention is not limited only to the following Examples.

The following materials were provided.

### (Base particle)

Base particle A: Resin particle (prepared according to Synthesis Example 1 below, the average particle diameter is 3.0 µm, the average value of circularity and the variation in circularity vary depending on lot, and are shown in the table)
Base particle B: Resin particle (the material is the same as the material of the base particle A, the average particle diameter is 2.5 µm, the average value of circularity and the variation in circularity vary depending on lot, and are shown in the table)
Base particle C: Resin particle (the material is the same as that of the base particle A, the particle diameter, the average value of circularity, and the variation in circularity are different from those of the base particle A, the average particle diameter is 10.0 µm, the average value of circularity is 0.92, and the variation in circularity is 0.04)
Base particle D: Resin particle (prepared according to Synthesis Example 2 below, the average particle diameter is 3.0 µm, the average value of circularity and the variation in circularity vary depending on lot, and are shown in the table)
Base particle E: Resin particle (prepared according to Synthesis Example 3 below, the average particle diameter is 3.0 µm, the average value of circularity and the variation in circularity vary depending on lot, and are shown in the table)

### (Synthesis Example 1)

A monomer mixed solution was obtained by stirring 30 parts by weight of divinylbenzene and 70 parts by weight of polytetramethylene glycol diacrylate. In a reaction kettle, 2000 parts by weight of a 2.5% by weight aqueous solution prepared by dissolving polyvinyl alcohol having a molecular weight of about 2000 in pure water were placed. The obtained monomer mixed solution was put therein and stirred to adjust the particle diameter so that monomer droplets would have a predetermined particle diameter. Next, heating was carried out at 90°C for 9 hours, and a polymerization reaction of monomer droplets was carried out to obtain particles. The obtained particles were washed with hot water and acetone several times, respectively, and then classified to recover resin particles, thereby obtaining the base particle A.

### (Synthesis Example 2)

In a 500 mL reaction vessel equipped with a stirrer and a thermometer, 300 g of a 0.13% by weight aqueous ammonia solution was placed. Next, a mixture of 4.1 g of methyltrimethoxysilane, 19.2 g of vinyltrimethoxysilane, and 0.7 g of a silicone alkoxy oligomer ("X-41-1053" manufactured by Shin-Etsu Chemical Co., Ltd.) was slowly added to the aqueous ammonia solution in the reaction vessel. The hydrolysis and the condensation reaction were allowed to proceed with stirring, and then 2.4 mL of a 25% by weight-ammonia aqueous solution was added. Thereafter, particles were isolated from the ammonia aqueous solution, and the obtained particles were fired at an oxygen partial pressure of 10⁻¹⁷ atm and 350°C for 2 hours to obtain base particles D.

### (Synthesis Example 3)

7.5 parts by weight of isobornyl acrylate, 85 parts by weight of polytetramethylene glycol diacrylate, and 7.5 parts by weight of cyclohexyl methacrylate were stirred to obtain a monomer mixed solution. In a reaction kettle, 2000 parts by weight of a 2.5% by weight aqueous solution prepared by dissolving polyvinyl alcohol having a molecular weight of about 2000 in pure water were placed. The obtained monomer mixed solution was put therein and stirred to adjust the particle diameter so that monomer droplets would have a predetermined particle diameter. Next, heating was carried out at 90°C for 9 hours, and a polymerization reaction of monomer droplets was carried out to obtain particles. The obtained particles were washed with hot water and acetone several times, respectively, and then classified to recover resin particles, thereby obtaining a base particle E.

### (Carbon filler)

"Denka Black" (particle diameter: 3.0 µm, average value of circularity: 0.30, variation in circularity: 0.20) manufactured by Denka Company Limited

### (Nickel particle)

"Nickel fine powder" (particle diameter: 3.0 µm, average value of circularity: 0.75, variation in circularity: 0.15) manufactured by Kojundo Chemical Lab. Co., Ltd.

### (Example 1)

The base particle A was added to and dispersed in 500 parts by weight of distilled water to obtain a suspension. A nickel-phosphorus alloy plating solution (pH 6.5) containing 200 g/L of nickel sulfate, 85 g/L of sodium hypophosphite, 30 g/L of sodium citrate, 50 ppm of thallium nitrate, and 20 ppm of bismuth nitrate was provided. While the obtained suspension was stirred at 60°C, the nickel-phosphorus alloy plating solution was gradually added dropwise to the suspension to perform electroless nickel-phosphorus plating. Thereafter, the particles were taken out by filtering the suspension, washed with water, and dried to obtain electroconductive particles including a nickel-phosphorus electroconductive layer on the surface of the base particle A and having protrusions on the surface. Thereafter, the obtained electroconductive particles were dispersed in an ethanol solution to which 1% by weight of 2-ethylhexyl acid phosphate (rust inhibitor) was added for 10 minutes, and then the particles were taken out by filtration and dried to perform a rust prevention treatment.

### (Example 2)

Electroconductive particles were obtained in the same manner as in Example 1 except that the rust prevention treatment was not performed.

### (Example 3)

Electroconductive particles were obtained in the same manner as in Example 1 except that the thickness of the electroconductive portion was changed.

### (Example 4)

Electroconductive particles were obtained in the same manner as in Example 1 except that the nickel-phosphorus alloy plating solution was changed to a nickel-boron plating solution (pH 8.5) containing 0.35 mol/L of nickel sulfate, 1.38 mol/L of dimethylamine borane, and 0.5 mol/L of sodium citrate.

### (Example 5)

Electroconductive particles were obtained in the same manner as in Example 1 except that the nickel-phosphorus alloy plating solution was changed to a pure nickel plating solution (pH 6.5) containing 200 g/L of nickel sulfate, 50 g/L of hydrazine hydrate, 30 g/L of sodium citrate, 50 ppm of thallium nitrate, and 20 ppm of bismuth nitrate.

### (Example 6)

Electroconductive particles were obtained in the same manner as in Example 4 except that a gold plating layer (thickness: 20 nm) was formed on an outer surface of a nickel-boron electroconductive layer (thickness: 80 nm) in preparing the electroconductive particles.

### (Example 7)

Electroconductive particles were obtained in the same manner as in Example 1 except that the nickel-phosphorus alloy plating solution was changed to a silver plating solution (pH 8.0) containing 200 g/L of silver nitrate and 50 g/L of hydroquinone, and the thickness of the electroconductive portion was changed.

### (Example 8)

Electroconductive particles were obtained in the same manner as in Example 1 except that the base particle A was changed to the base particle D.

### (Example 9)

Electroconductive particles were obtained in the same manner as in Example 1 except that the base particle A was changed to the base particle D and the thickness of the electroconductive portion was changed.

### (Example 10)

Electroconductive particles were obtained in the same manner as in Example 1 except that the base particle A was changed to the base particle B.

### (Example 11)

Electroconductive particles were obtained in the same manner as in Example 1 except that the base particle A was changed to the base particle C.

### (Example 12)

Electroconductive particles were obtained in the same manner as in Example 1 except that the base particle A was changed to the base particle E.

### (Comparative Example 1)

Electroconductive particles were obtained in the same manner as in Example 1 except that the base particle A was changed to a carbon filler and the electroconductive portion was not formed.

### (Comparative Example 2)

Electroconductive particles were obtained in the same manner as in Example 1 except that the base particle A was changed to a nickel particle and the electroconductive portion was not formed.

### (Comparative Example 3)

Electroconductive particles were obtained in the same manner as in Example 1 except that the base particle A was changed to the base particle D and the thickness of the electroconductive portion was changed.

### (Comparative Example 4)

Electroconductive particles were obtained in the same manner as in Example 1 except that the base particle A was changed to the base particle E and the thickness of the electroconductive portion was changed.

### (Evaluation)

### (1) Specific gravity

For the obtained electroconductive particles, the specific gravity was measured by the above-described method using a specific gravity meter ("AccuPyc Series" manufactured by Shimadzu Corporation).

### (2) Volume resistivity

For the obtained electroconductive particles, the volume resistivity was measured by the above-described method using a powder resistance measurement system ("Powder Resistance Measurement System MCP Series" manufactured by Mitsubishi Chemical Analytech Co., Ltd.).

### (3) Compressive modulus at 20% compression of electroconductive particle (20% K value)

The 20% K value of the obtained electroconductive particle was measured by the above-described method using a micro compression testing machine ("Fischer Scope H-100" manufactured by FISCHER INSTRUMENTS K.K.).

### (4) Dispersibility of electroconductive particles

An electroconductive material was prepared by adding and dispersing the electroconductive particles to and in "Struct Bond XN-5A" manufactured by Mitsui Chemicals, Inc. so that the content of the obtained electroconductive particles was 10% by weight. The obtained electroconductive material was applied to a slide glass, 100 electroconductive particles were observed using a microscope, and the number of electroconductive particles settled or aggregated was measured. The dispersibility of the electroconductive particles was assessed according to the following criteria.

### [Evaluation criteria of dispersibility of electroconductive particles]

○○○: the number of settled or aggregated electroconductive particles is less than 3
○○: the number of settled or aggregated electroconductive particles is 3 or more and less than 5
○: the number of settled or aggregated electroconductive particles is 5 or more and less than 10
×: the number of settled or aggregated electroconductive particles is 10 or more

### (5) Metal foil breakage suppression property

An electroconductive material (material of the connection portion) was prepared by adding and dispersing the electroconductive particles to and in "Struct Bond XN-5A" manufactured by Mitsui Chemicals, Inc. so that the content of the obtained electroconductive particles was 10% by weight. A copper foil (width 1 m × length 1 m × thickness 10 µm) was prepared as the first metal foil, and an aluminum foil (width 1 m × length 1 m × thickness 30 µm) was prepared as the second metal foil. The electroconductive material having a thickness of 3 µm was disposed on the surface of the first metal foil (copper foil) by a roll coating method. Thereafter, the second metal foil (aluminum foil) was disposed on the surface of the electroconductive material on the side opposite to the first metal foil, and heated at 150°C for 20 minutes to cure the electroconductive material, and thus to form a connection portion, and the first metal foil and the second metal foil were electrically connected by the electroconductive particles in the connection portion to obtain a connection structure (current collector). The first metal foil and the second metal foil of the obtained connection structure were observed to confirm whether the metal foil was broken. The metal foil breakage suppression property was assessed according to the following criteria.

### [Evaluation criteria of metal foil breakage suppression property]

○○: The entire metal foil is not broken or swollen
○: The entire metal foil is not broken, and a portion of the metal foil is swollen
×: At least a portion of the metal foil is broken

### (6) Initial connection resistance

(5) The connection resistance A between the metal foils of the connection structure (current collector) obtained in "(5) Metal foil breakage suppression property" was measured by the four-terminal method. The initial connection resistance was assessed according to the following criteria.

### [Evaluation criteria of initial connection resistance]

○○○: The connection resistance A is 2.0 Ω or less
○○: The connection resistance A is more than 2.0 Ω and 3.0 Ω or less
○: The connection resistance A is more than 3.0 Ω and 5.0 Ω or less
×: The connection resistance A is more than 5.0 Ω

### (7) Conduction reliability

(6) The connection structure (current collector) after the evaluation of the initial connection resistance was allowed to stand for 500 hours under conditions of 85°C and a humidity of 85% to perform a conduction reliability test in a high temperature and high humidity environment. In the connection structure after the conduction reliability test, connection resistance B between the metal foils was measured by the four-terminal method. The conduction reliability was assessed according to the following criteria.

### [Evaluation criteria of conduction reliability]

○○○: The connection resistance B is 2.0 Ω or less
○○: The connection resistance B is more than 2.0 Ω and 3.0 Ω or less
○: The connection resistance B is more than 3.0 Ω and 5.0 Ω or less
×: The connection resistance B is more than 5.0 Ω

The configuration and results of the electroconductive particles are shown in Tables 1 to 4 below.

**[Table 1]**

| | | | Example 1 | Example 2 | Example 3 | Example 4 |
|---|---|---|---|---|---|---|
| Base particle | Type | - | A | A | A | A |
| | Particle diameter | µm | 3.0 | 3.0 | 3.0 | 3.0 |
| | Average value of circularity | - | 0.90 | 0.91 | 0.89 | 0.90 |
| | Variation in circularity | - | 0.03 | 0.03 | 0.04 | 0.04 |
| Electroconductive portion | Type | - | Ni-P | Ni-P | Ni-P | Ni-B |
| | Thickness | nm | 100 | 100 | 200 | 100 |
| | Presence or absence of rust inhibitor | - | Presence | Absence | Presence | Presence |
| Electroconductive particle | Specific gravity | - | 2.3 | 2.2 | 2.4 | 2.0 |
| | Volume resistivity | Ω·m | 0.0015 | 0.0015 | 0.0013 | 0.0014 |
| | 20% K value | N/m² | 2500 | 2500 | 3000 | 2700 |
| Evaluation | Dispersibility of electroconductive particles | - | ○○○ | ○○ | ○○○ | ○○○ |
| | Metal foil breakage suppression property | - | ○○ | ○○ | ○○ | ○○ |
| | Initial connection resistance | - | ○○○ | ○○○ | ○○○ | ○○○ |
| | Conduction reliability | - | ○○○ | ○ | ○○○ | ○○○ |

**[Table 2]**

| | | | Example 5 | Example 6 | Example 7 | Example 8 |
|---|---|---|---|---|---|---|
| Base particle | Type | - | A | A | A | D |
| | Particle diameter | µm | 3.0 | 3.0 | 3.0 | 3.0 |
| | Average value of circularity | - | 0.89 | 0.90 | 0.91 | 0.92 |
| | Variation in circularity | - | 0.03 | 0.03 | 0.04 | 0.03 |
| Electroconductive portion | Type | - | Ni | Au/Ni-B | Ag | Ni-P |
| | Thickness | nm | 100 | 100 | 300 | 100 |
| | Presence or absence of rust inhibitor | - | Presence | Presence | Presence | Presence |
| Electroconductive particle | Specific gravity | - | 2.1 | 2.1 | 4.0 | 2.8 |
| | Volume resistivity | Ω·m | 0.0013 | 0.0012 | 0.0007 | 0.0009 |
| | 20% K value | N/m² | 2600 | 2400 | 2000 | 19000 |
| Evaluation | Dispersibility of electroconductive particles | - | ○○○ | ○○○ | ○○○ | ○○○ |
| | Metal foil breakage suppression property | - | ○○ | ○○ | ○○ | ○○ |
| | Initial connection resistance | - | ○○○ | ○○○ | ○○○ | ○○○ |
| | Conduction reliability | - | ○○○ | ○○○ | ○○○ | ○○○ |

**[Table 3]**

| | | | Example 9 | Example 10 | Example 11 | Example 12 |
|---|---|---|---|---|---|---|
| Base particle | Type | - | D | B | C | E |
| | Particle diameter | µm | 3.0 | 2.5 | 10.0 | 3.0 |
| | Average value of circularity | - | 0.91 | 0.87 | 0.92 | 0.90 |
| | Variation in circularity | - | 0.03 | 0.03 | 0.04 | 0.03 |
| Electroconductive portion | Type | - | Ni-P | Ni-P | Ni-P | Ni-P |
| | Thickness | nm | 200 | 100 | 100 | 100 |
| | Presence or absence of rust inhibitor | - | Presence | Presence | Presence | Presence |
| Electroconductive particle | Specific gravity | - | 2.8 | 2.6 | 1.8 | 2.1 |
| | Volume resistivity | Ω·m | 0.0009 | 0.0012 | 0.0021 | 0.0013 |
| | 20% K value | N/m² | 23000 | 3900 | 1200 | 1300 |
| Evaluation | Dispersibility of electroconductive particles | - | ○○○ | ○○○ | ○○○ | ○○○ |
| | Metal foil breakage suppression property | - | ○ | ○○ | ○ | ○○ |
| | Initial connection resistance | - | ○○○ | ○○ | ○○ | ○○ |
| | Conduction reliability | - | ○○ | ○○ | ○○ | ○○ |

**[Table 4]**

| | | | Comparative Example 1 | Comparative Example 2 | Comparative Example 3 | Comparative Example 4 |
|---|---|---|---|---|---|---|
| Base particle | Type | | Carbon filler | Nickel particle | D | E |
| | Particle diameter | µm | 3.0 | 3.0 | 3.0 | 3.0 |
| | Average value of circularity | - | 0.30 | 0.75 | 0.92 | 0.88 |
| | Variation in circularity | - | 0.20 | 0.15 | 0.03 | 0.04 |
| Electroconductive portion | Type | - | - | - | Ni-P | Ni-P |
| | Thickness | nm | - | - | 300 | 50 |
| | Presence or absence of rust inhibitor | - | - | - | Presence | Presence |
| Electroconductive particle | Specific gravity | - | 1.5 | 8.9 | 2.9 | 2.1 |
| | Volume resistivity | Ω·m | 0.0120 | 0.0009 | 0.0008 | 0.0013 |
| | 20% K value | N/m² | 300 | 50000 | 27000 | 900 |
| Evaluation | Dispersibility of electroconductive particles | - | × | ○ | 000 | 000 |
| | Metal foil breakage suppression property | - | ○ | × | × | ○ |
| | Initial connection resistance | - | × | ○ | × | ○ |
| | Conduction reliability | - | × | × | × | × |

### EXPLANATION OF SYMBOLS

1: Electroconductive particle
2: Base particle
3: Electroconductive portion
11: Electroconductive particle
11a: Protrusion
12: Electroconductive portion
12a: Protrusion
13: Core material
21: Electroconductive particle
21a: Protrusion
22: Electroconductive portion
22a: Protrusion
22A: First electroconductive portion
22Aa: Protrusion
22B: Second electroconductive portion
22Ba: Protrusion
51: Connection structure (current collector)
52: First metal foil
53: Second metal foil
54: Connection portion
61: Bipolar battery
62: Positive electrode
63: Negative electrode
64: Electrolyte layer

## Claims

1. An electroconductive particle used for electrically connecting metal foils to each other, the electroconductive particle comprising:
a base particle; and
an electroconductive portion disposed on a surface of the base particle,
a compressive modulus at 20% compression of the electroconductive particle being 1000 N/mm² or more and 25000 N/mm² or less.

2. The electroconductive particle according to claim 1, wherein the base particle is a resin particle.

3. The electroconductive particle according to claim 1 or 2, wherein a specific gravity of the electroconductive particle is 1.0 or more and 4.5 or less.

4. The electroconductive particle according to any one of claims 1 to 3, wherein a volume resistivity of the electroconductive particle is 0.0030 Ω·m or less.

5. The electroconductive particle according to any one of claims 1 to 4, wherein the electroconductive portion contains nickel.

6. The electroconductive particle according to any one of claims 1 to 5, wherein the electroconductive portion contains a rust inhibitor.

7. The electroconductive particle according to any one of claims 1 to 6, wherein an average value of circularity of the base particle is 0.85 or more and 1.00 or less.

8. The electroconductive particle according to any one of claims 1 to 7, wherein a variation in the circularity of the base particle is 0.04 or less.

9. An electroconductive material comprising:
the electroconductive particle according to any one of claims 1 to 8; and
a binder resin.

10. A connection structure comprising:
a first metal foil;
a second metal foil; and
a connection portion that connects the first metal foil and the second metal foil,
a material of the connection portion including the electroconductive particle according to any one of claims 1 to 8, and
the first metal foil and the second metal foil being electrically connected by the electroconductive particles.

11. The connection structure according to claim 10, wherein the thicknesses of the first metal foil and the second metal foil are each 100 µm or less.

12. The connection structure according to claim 10 or 11, wherein the first metal foil and the second metal foil each include gold, silver, copper, tin, aluminum, nickel, titanium, or stainless steel.

13. A current collector used in a battery, the current collector comprising:
a first metal foil;
a second metal foil;
a connection portion that connects the first metal foil and the second metal foil,
a material of the connection portion including the electroconductive particle according to any one of claims 1 to 8, and
the first metal foil and the second metal foil being electrically connected by the electroconductive particles.

14. The current collector according to claim 13, wherein the current collector is used in a bipolar battery.

15. The current collector according to claim 13 or 14, wherein the current collector is wound in a roll shape.

16. A use of the electroconductive particle according to any one of claims 1 to 8 for electrically connecting a first metal foil and a second metal foil in a current collector included in a battery including the first metal foil, the second metal foil, and a connection portion that connects the first metal foil and the second metal foil.

17. The use according to claim 16, wherein the battery is a bipolar battery.
